(19) Europäisches Patentamt
European Patent Office
Office européen des brevets

(11) Publication number: **0 049 766**
**B1**

# (12) EUROPEAN PATENT SPECIFICATION

(45) Date of publication of patent specification: **27.03.85**

(51) Int. Cl.$^4$: **C 08 F 2/32**

(21) Application number: **81107257.8**

(22) Date of filing: **15.09.81**

## (54) High concentration water soluble polymers as water-in-oil emulsions.

(30) Priority: **02.10.80 US 193517**

(43) Date of publication of application:
**21.04.82 Bulletin 82/16**

(45) Publication of the grant of the patent:
**27.03.85 Bulletin 85/13**

(84) Designated Contracting States:
**AT CH DE FR GB IT LI NL SE**

(56) References cited:
**DE-B-1 211 655**
**FR-A-2 383 200**
**GB-A- 980 763**

(73) Proprietor: **AMERICAN CYANAMID COMPANY**
**1937 West Main Street P.O. Box 60**
**Stamford Connecticut 06904 (US)**

(72) Inventor: **Robinson, Peter M.**
**139 Clark Hill Road**
**Milford Connecticut (US)**
Inventor: **Rakowitz, David H.**
**45 Sundance Drive**
**Cos Cob Connecticut (US)**
Inventor: **Nowakowski, Lesley Jeanette**
**113 Cliff Street**
**Shelton Connecticut (US)**

(74) Representative: **Wächtershäuser, Günter, Dr.**
**Tal 29**
**D-8000 München 2 (DE)**

**EP 0 049 766 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates generally to water soluble polymers dispersed in water-in-oil emulsions. More particularly, the present invention relates to stable water-in-oil emulsions which contain a high concentration of finely dispersed polymeric particles and a polymeric surfactant therein. The stability at the high concentration is made possible by the use of the polymeric surfactants of this invention.

Water-in-oil emulsions having water soluble polymers dispersed therein are well known in the art. Such emulsions have found a wide variety of uses, for example, as flocculants in the mining industry and in sewage treatment, and as mobility control agents in enhanced oil recovery. However, commercially available stable emulsions have a relatively low polymeric solids content. Accordingly, large volumes of these emulsions must be used, and shipment and storage costs are high.

Heretofore, the most successful method of dealing with this problem was to concentrate low solids emulsions following their preparation. Various concentration processes are disclosed in U.S. Patent Nos. 3,849,361, 4,021,399 and 4,052,353. However, each of these processes necessitates the additional costly step of concentrating the emulsion. Thus it would be an advancement in of polymeric solids could be prepared without the requirement of such additional step.

It is, accordingly, an object of the instant invention to provide a method to directly prepare a high polymeric solids content water-in-oil emulsion which possesses excellent stability.

Other objects will become apparent from the ensuing description.

It has been discovered that the addition of certain polymeric surfactants will permit the water soluble polymeric solids content in a water-in-oil emulsion to be increased from the current levels of from 20% to 30% to from about 40% to 60% based upon the total emulsion weight, i.e. water, oil and polymer, without the necessity of concentrating the emulsion to achieve this result. The emulsions possess excellent mechanical stability. The emulsions also show significantly improved stability to sedimentation and to inorganic salt breaking which is a problem when the emulsions are produced on a commercial scale using industrial machinery and in industrial use. The polymeric surfactant of the present invention has the general formula (I):

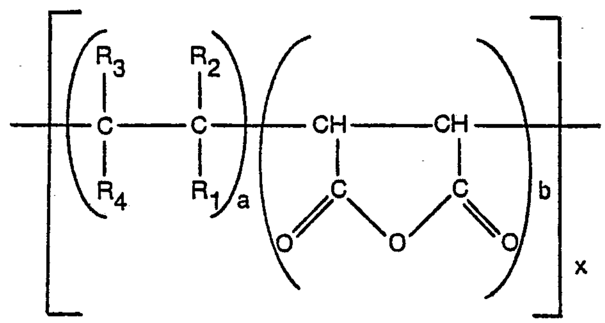
(I)

wherein x is a whole number greater than about 5, the mole ratio of a:b is from 3:1 to 1:1, provided the HLB number is maintained at less than about 14, preferably less than about 10; and $R_1$, $R_2$, $R_3$ and $R_4$ are each independently hydrogen, alkyl ($C_{1-48}$), alkoxy ($C_{1-48}$), alkenyl ($C_{2-48}$), aryl ($C_{6-12}$) or alkaryl ($C_{7-12}$) wherein at least one of $R_1$—$R_4$ is alkyl ($C_{4-48}$). A preferred surfactant corresponds to the above formula wherein x is about 100 to 400, the ratio of a:b is about 1:1, $R_1$, $R_2$ and $R_3$ are hydrogen and $R_4$ is $C_{16}H_{33}$.

The polymeric surfactant may be prepared in any suitable manner, generally be reacting maleic anhydride with an appropriate comonomer. Such preparation may, for example, be conducted in the manner disclosed in U.S. Patent No. 3,732,337. It is to be noted, however, that the particular method of preparing the polymeric surfactant does not constitute a feature of this invention.

Also within the scope of the above definition of the polymeric surfactant are the non-ionic and cationic derivatives thereof. As is obvious to those skilled in the art, such derivatives may be prepared by reaction of the polymeric surfactant with, for example, an alcohol or an amine. British Patent No. 1,093,081 discloses the use of a surfactant similar to the cationic derivative of this invention as a dispersing agent for fine particles in non-aqueous solvents.

It has been further discovered that the stability of the high polymeric solids content water-in-oil emulsions may be more greatly enhanced when the hereinabove described polymeric surfactant is used in conjunction with a secondary polymeric surfactant which is a linear ABA block copolymer of polyester-polyalkylene oxide-polyester wherein the alkylene oxide content is less than about 40 percent, by weight. Preferably, the alkylene oxide content is about 30 percent. Examples of such copolymers are disclosed in U.S. Patent No. 4,203,877.

Either or both of the polymeric surfactant and the secondary polymeric surfactant of this invention may be added prior to polymerization, during polymerization, or after polymerization if the system has not previously gelled. Preferably the polymeric surfactant is added prior to polymerization as it has been found to allow the use of higher polymerization temperatures.

The emulsion of the instant invention is so termed because the diameters of the dispersed polymeric

particles range generally from 0.1 to 10 µm, with about 95% of the particles measuring from about 0.7 to 2.5 µm in diameter. This is to be contrasted with a suspension, such as that which is the subject of British Patent No. 1,329,062, wherein the particle diameters range generally up to 150 µm. Commercial suspensions normally have particle sizes in the 30 to 150 µm range.

Although the present invention has been found to be independent of the particular emulsion polymerization method employed, certain preferences are delineated in the general description of emulsion preparation which follows:

A preliminary emulsion is made by homogenizing oil and aqueous phases. The oil phase of the emulsion, which generally comprises from about 5 to 40 percent by weight of the emulsion, is comprised of one or more inert hydrophobic liquids. Preferably, the oil phase comprises from about 20 to 30 percent of the emulsion. The oil used may be selected from a large class of organic liquids which are immiscible with water, including liquid hydrocarbons and substituted liquid hydrocarbons. As representative examples there may be mentioned benzene, xylene, toluene, mineral oils, kerosenes, napthas and chlorinated hydrocarbons such as perchloroethylene.

The oil phase also contains one or more conventional emulsion polymerization stabilizers. Such stabilizers are well known to the art, and those preferred for water-in-oil emulsions include the sorbitan esters. The most preferred conventional stabilizer is sorbitan mono-oleate. The conventional stabilizer is present in an amount sufficient to stabilize the emulsion during polymerization. Although the amount will vary depending upon, inter alia, the monomers used and polymerization conditions, generally from about 0.5 to 5.0 percent by weight, based upon the total emulsion weight, is used. The emulsion polymerization stabilizer by itself, even in an increased amount, has been found incapable of stabilizing a resultant emulsion having about 40 to 60% solids.

The aqueous phase generally comprises from about 95 to 60 percent, by weight, of the emulsion. Preferably, it comprises from about 80 to 70 percent thereof. In addition to the water, the aqueous phase contains the desired monomers to be polymerized, in an amount equal to from about 40 to 60% by weight, based on the total weight of the emulsion, and generally a chain transfer agent and an initiator. Alternatively, the chain transfer agent and/or the initiator may be added to the system after the preliminary emulsion has been prepared. The initiator may also be added continuously during polymerization to control the rate of polymerization depending upon the particular monomers used and their reactivity. Further alternatively, the initiator may be present in either phase with the monomers being added either continuously or incrementally thereafter. Or the initiator and the monomers may all be added to the preliminary emulsion.

Any monomers which, when polymerized or copolymerized, yield water soluble polymers, may be used in the present invention. The term "water soluble" means that the polymer is soluble in water in an amount of at least 1% by weight. The polymer may be either anionic, non-ionic or cationic. Examples of monomers which yield such water soluble polymers or copolymers include acrylamide, acrylic acid and its salts, methacrylamide, methacrylic acid and its salts, methyl acrylate, ethyl acrylate, propyl acrylate, methyl methacrylate, ethyl methacrylate, dimethylaminoethyl acrylate, dimethylaminoethyl methacrylate, diethylaminoethyl acrylate, diethylaminoethyl methacrylate, hydroxyethyl acrylate, hydroxyethyl methacrylate, diethyl methylammonioethyl acrylate methylsulfate, trimethylammonioethyl methacrylate chloride, styrene, acrylonitrile, 2-acrylamido-2-methylpropane sulfonic acid and its salts, 3-(methylacrylamido)-propyl-trimethylammonium chloride, vinyl methyl ether, vinyl ethyl ether, alkali metal and ammonium salts of vinyl sulfonic acid, vinyl pyridine, vinyl pyrrolidone, vinyl imidazole and diallyldimethylammonium chloride. Preferably, the monomers are selected from acrylamide, acrylic acid and its salts, a quaternary of dimethylaminoethylmethacrylate, and 3-(methylacrylamido)propyl-tri-methylammonium chloride. Most preferably, the polymer is polyacrylamide, polyacrylic acid, or a copolymer of acrylamide and acrylic acid.

Generally, an anionic polymeric surfactant is used when the water soluble polymer is anionic, and a cationic derivative of the polymeric surfactant is employed when the water soluble polymer is cationic. A non-ionic derivative of the polymeric surfactant may be utilized for any type of polymer. However, it is not critical that this practice be followed. Again, routine experimentation will determine optimum combinations.

Any conventional chain transfer agent may be employed, such as propylene glycol, isopropanol, 2-mercaptoethanol, dodecyl mercaptan and thioglycolic acid. The chain transfer agent is generally present in an amount equal to from about 0.1 to 10.0 percent, by weight, based on the total emulsion weight. However, more of the chain transfer agent may be added.

The initiator may be any free radical producing material well known in the art. The preferred free radical initiators are the peroxide-type polymerization initiators and the azo-type polymerization initiators. Generally the amount of initiator utilized is from about 0.0005 to 0.5 percent by weight, based upon the total emulsion weight. Radiation may also be used to initiate the reaction, if desired.

A sequestering agent may also be present in the aqueous phase. Although the preferred sequestering agent is ethylenediamine tetraacetic acid (EDTA), other sequestering agents, such as pentasodium diethylenetriamine pentaacetate, may be employed. Usually from about 0.01 to 2.0 percent by weight based on the weight of the emulsion, of the sequestering agent is added, although more may be used.

Following preparation of the preliminary emulsion, polymerization of the monomers is commenced at

a temperature sufficiently high to break down the initiator to produce the desired free radicals. Generally a suitable range of temperatures is about −20°C to 200°C, with preferred temperatures about 20°C to 100°C.

Preferably the polymerization is run at a pH of about 2—12, and a suitable amount of ammonia or other base, or acid, may be added to the preliminary emulsion to achieve the desired pH. The polymerization is usually completed in from about an hour or two to several days, depending upon the monomers employed and other reaction variables. It is generally carried out at atmospheric pressure, but super-atmospheric pressure is advantageously used when volatile ingredients are involved.

Following completion of the polymerization, the pH of the emulsion may be adjusted as desired. For an anionic emulsion, this is generally about 4—10. For a cationic emulsion, this is typically about 3—5. For a non-ionic emulsion, it is about 3—7. A breaker surfactant may also be added to yield a single package final product. Any suitable breaker surfactant may be employed, experimentation being the best means of determining which breaker surfactant will perform optimally with a given emulsion system. A preferred breaker surfactant is a compound prepared by reacting ethylene oxide with nonyl phenol. Typically, the breaker surfactant is added in an amount equal to from about 0.5 to 5.0 percent by weight, based on the total emulsion weight. Preferably, from about 1.5 to 3.5 percent of the breaker surfactant is added.

Once prepared, the emulsions of the present invention may be chemically modified in any known manner. The term chemically modified is intended to cover further treatment of the dispersed polymer and/or the addition of components to the dispersed polymer which, without the stabilization provided by the polymeric surfactants of the present invention, would normally cause the polymeric particles to coagulate or agglomerate. Examples of such further treatments are disclosed in U.S. Patent Nos. 4,052,353 and 4,171,296. The emulsion of the present invention may also be concentrated in any suitable manner, such as is disclosed in U.S. Patent No. 4,021,399.

The following examples are illustrative of the present invention, but are not in any way a limitation thereof. All parts and percentages are by weight unless otherwise specified.

Example 1

A water phase containing 173.9 g of acrylamide, 75.4 g of acrylic acid, about 19 g of ammonia, 5.2 g of propylene glycol, 0.48 g of the disodium salt of ethylene diaminetetraacetic acid, and 0.008 g of tertiary butyl hydroperoxide in 138.6 g of water (for a total aqueous phase of 412.6 g) and an oil phase containing 143.1 g oil, 11.4 g of sorbitan mono-oleate and 2.85 g of an anionic polymeric surfactant having the formula (I) above, wherein x is about 100 to 400 and the ratio of a:b is 1:1, $R_1$, $R_2$ and $R_3$ are each hydrogen and $R_4$ is $C_{16}H_{33}$ (for a total oil phase of 157.35 g) were homogenized. The resulting emulsion system was then transferred to a suitable reaction vessel with stirring and sparged with $N_2$. As 0.5 ml/h of a 0.36% solution of sodium metabisulfite was added for 4 to 5 hours, the temperature of the emulsion increased to about 50°C, and agitation was maintained for 5 to 6 hours, polymerization being completed at the end of that time.

The polymeric solids content of the emulsion product was about 46 percent by weight.

In the following examples, emulsions were prepared generally in accordance with the procedure outlined in Example 1, but with the polymeric content changed as indicated. Also, in each instance a breaker surfactant, prepared by reacting ethylene oxide with nonyl phenol, was added to the final emulsion to yield a one package product. (Such an addition is commonly made in commercial preparation so that less work is involved on the consumer's part to ready the emulsion for use.)

In each Example, the emulsions were stirred at room temperature and a given emulsion's resistance to gelation under those circumstances is the measurement of its mechanical stability.

Example 2

Emulsions were prepared containing about 46 percent, by weight, of polymeric solids (as a 70/30 acrylamide/ammonium acrylate copolymer), and having oil phases with the characteristics set out in Table I. Also included is the mechnical stability determined for each emulsion.

It is seen from Table I that the use of the polymeric surfactant of the instant invention renders the resultant emulsion significantly more stable than when either sorbitan mono-oleate is the lone surfactant or sorbitan monolaurate is used as a co-surfactant.

Example 3

Emulsions were prepared containing polymeric solids as in Example 2 but having oil phases with the characteristics set out in Table II. As can be seen from the results shown, the polymeric surfactant of the present invention greatly enhanced the mechanical stability of the emulsions prepared therewith.

Example 4

Emulsions were prepared containing about 44 percent, by weight, of polyacrylamide solids (the polymer being a homopolymer of acrylamide) and having oil phases with the characteristics set out in Table III. The results are self-explanatory.

Example 5

Emulsions were prepared containing about 50.5 percent, by weight, of polymeric solids (as ammonium acrylate in a homopolymer of acrylic acid) and having oil phases with the characteristics outlined in Table IV.

Example 6

Emulsions having increased solids over those of Example 4, i.e., 47.5 percent, by weight, of polymeric solids (the polymer being a homopolymer of acrylamide), and having oil phase contents as set forth in Table V, were prepared. In addition to the polymeric surfactant of Example 1, emulsion R contained a secondary polymeric surfactant of the present invention which is a linear ABA block copolymer of polyester-polyethylene oxide-polyester, prepared by reacting condensed 12-hydroxystearic acid with polyethylene oxide according to the procedure outlined in U.S. Patent No. 4,203,877, and containing about 30% by weight, ethylene oxide. Emulsion S contained a polymeric surfactant which is a branched polyester-polyethylene oxide compound, prepared by reacting an alk(en)yl succinic anhydride with polyethylene oxide according to the procedure outlined in U.S. Patent No. 4,203,877.

TABLE I

| | Emulsion A | Emulsion B | Emulsion C | Emulsion D | Emulsion E |
|---|---|---|---|---|---|
| Oil phase* | 21.9 | 21.9 | 27.3 | 21.9 | 27.7 |
| Oil phase components* Oil | 18.9 | 18.9 | 23.8 | 18.9 | 25.1 |
| Sorbitan mono-oleate | 2.0 | 1.5 | 3.5 | 2.0 | 2.0 |
| Sorbitan monolaurate | 1.0 | 1.5 | — | — | — |
| Polymeric surfactant of Example 1 | — | — | — | 1.0 | 0.5 |
| Mechanical stability | 4 h | gelled during polymer-ization | 3—5 h | 1000 h | 1000 h |

*Expressed as percentages of total emulsion weight.

TABLE II

| | Emulsion F | Emulsion G | Emulsion H | Emulsion I | Emulsion J | Emulsion K |
|---|---|---|---|---|---|---|
| Oil phase* | 25.8 | 25.8 | 25.8 | 25.8 | 25.8 | 25.8 |
| Oil phase components* Oil | 23.8 | 22.8 | 22.8 | 23.6 | 23.3 | 22.8 |
| Sorbitan mono-oleate | 2.0 | 2.0 | 2.0 | 2.0 | 2.0 | 2.0 |
| Sorbitan trioleate | — | — | 1.0 | — | — | — |
| Sorbitan monolaurate | — | 1.0 | — | — | — | — |
| Polymeric surfactant of Example 1 | — | — | — | 0.2 | 0.5 | 1.0 |
| Mechanical stability | 2—5 h | gelled during polymer-ization | 6—17 h | 120—140 h | 1000 h | 1000 h |

*Expressed as percentages of total emulsion weight.

TABLE III

| | Emulsion L | Emulsion M |
|---|---|---|
| Oil phase* | 28.2 | 27.8 |
| Oil phase components* | | |
| Oil | 25.6 | 25.7 |
| Sorbitan mono-oleate | 2.0 | 2.0 |
| Polymeric surfactant of Example 1 | 0.5 | — |
| Mechanical stability | 600 h | gelled during polymerization |

*Expressed as percentage of total emulsion weight.

TABLE IV

| | Emulsion N | Emulsion O |
|---|---|---|
| Oil phase* | 27.6 | 27.6 |
| Oil phase components* | | |
| Oil | 25.0 | 25.0 |
| Sorbitan mono-oleate | 2.0 | 2.0 |
| Polymeric surfactant of Example 1 | 0.5 | — |
| Mechanical stability | 600 h | gelled during polymerization |

*Expressed as percentage of total emulsion weight.

The results set forth in Table V demonstrate that the polymeric surfactant of this invention is an essential ingredient providing mechanical stability and that when the secondary polymeric surfactant of the present invention (A) is further added to the emulsion, the mechanical stability is even that much more enhanced.

Example 7

This example demonstrates the mechanical and sedimentation stabilities of emulsions containing the polymeric surfactant alone and the polymeric surfactant together with the second polymeric surfactant.

Emulsions containing about 46.5 percent, by weight, of polymeric solids (as a 70/30 acrylamide/ammonium acrylate copolymer) and having oil phase contents as set forth in Table VI were prepared.

The above data shows that the combination of the instant invention's polymeric surfactant with secondary polymeric surfactant A not only provided the emulsion with excellent mechanical stability (as did the polymeric surfactant by itself), but also resulted in a smaller polymeric particle size and no oil phase separation after two months. When used without the polymeric surfactant, however, the secondary polymeric surfactant A did not work.

Example 8

The method of preparing the emulsion set forth in Example 1 is repeated in every detail except that the polymeric surfactant of this invention is not present in the preliminary emulsion. Instead, it is added during the polymerization of the monomers. Similar results are obtained.

TABLE V

| | Emulsion P | Emulsion Q | Emulsion R | Emulsion S |
|---|---|---|---|---|
| Oil phase* | 25.3 | 25.3 | 25.3 | 25.3 |
| Oil phase components*<br>Oil | 23.8 | 23.8 | 23.8 | 23.8 |
| Sorbitan mono-oleate | 1.5 | 1.0 | 0.5 | 0.5 |
| Polymeric surfactant of Example 1 | — | 0.5 | 0.5 | 0.5 |
| A | — | — | 0.5 | — |
| B | — | — | — | 0.5 |
| Mechanical stability | Emulsion not stable prior to polymerization | 2—12 h | 50—100 h | 2—12 h |

*Expressed as percentage of total emulsion weight.

TABLE VI

| | Emulsion T | Emulsion U | Emulsion V |
|---|---|---|---|
| Oil phase* | 23.7 | 23.7 | 23.7 |
| Oil phase components*<br>Oil | 19.7 | 19.7 | 19.7 |
| Sorbitan mono-oleate | 2.0 | 2.0 | 2.0 |
| Polymeric surfactant of Example 1 | — | 1.0 | 2.0 |
| A | 2.0 | 1.0 | — |
| Mechanical stability | gelled during polymerization | 100 h | 100 h |
| Particle size (95% of particles within range) | | 0.8—1.5 μm | 0.8—2.3 μm |
| Separation of oil after two (2) months | | no separation | 8% by volume |

*Expressed as percentage of total emulsion weight.

Example 9

The procedure of Example 1 is repeated except the polymeric surfactant is replaced by other polymeric surfactants as per the formula (I) wherein $R_1$, $R_2$, $R_3$, $R_4$, x and the ratio of a:b were as follows:

| $R_1$ | $R_2$ | $R_3$ | $R_4$ | x | a:b |
|---|---|---|---|---|---|
| $CH_3$ | H | H | $C_8H_{17}$ | 100 | 2:1 |
| H | $C_{10}H_{21}$ | $C_2H_5$ | H | 8 | 1:2 |
| $C_2H_5$ | $CH_3$ | $OCH_3$ | $C_{12}H_{25}$ | 400 | 1:1 |
| H | 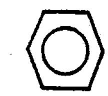 | $C_{22}H_{45}$ | H | 700 | 1:3 |

In each case, substantially similar stabilized emulsions having 40 to 60% polymeric solids result.

Example 10

The procedure of Example 1 is repeated except that the monomers are replaced with equal amounts of

a) 95:5 mole percent acrylamide:tri-methylammonio-ethyl methacrylate chloride, which yields a cationic polymer, and the temperature of polymerization was raised to 60°C;

b) 100 mole percent acrylic acid, yielding an anionic polymer; and

c) 100 mole percent methacrylamide, yielding a non-ionic polymer and the polymeric surfactant is made non-ionic by derivatization with methanol by reacting methanol therewith for about 5 hours at about 120°C.

Stable emulsions result in each instance.

Example 11

The procedure of Example 1 is repeated except that the monomers used are 90 mole percent acrylamide and 10 mole percent 3-(methacrylamido)propyl-tri-methylammonium chloride (the resultant polymer being cationic), and the polymeric surfactant is made cationic by derivatization with diethylene triamine by reacting diethylene triamine with it under reflux conditions for 4 to 6 hours at about 200°C.

A stable emulsion results.

**Claims**

1. A stable water-in-oil emulsion comprised of from about 40 to 60% by weight, based on the total weight of the emulsion, of a water soluble polymer, and a polymeric surfactant, in an amount sufficient to stabilize the emulsion, having the formula (I):

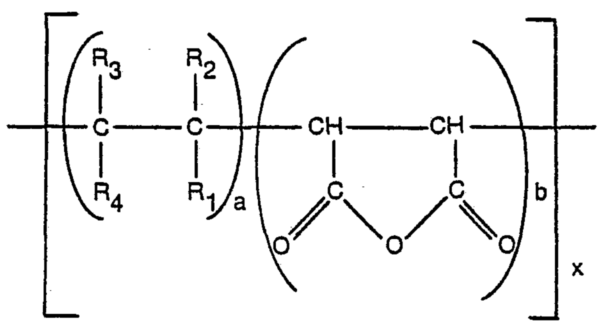 (I)

wherein x is a whole number greater than about 5, the mole ratio of a:b is from 3:1 to 1:1, provided the HLB number is maintained at less than about 14, $R_1$, $R_2$, $R_3$ and $R_4$ are independently selected from the group consisting of hydrogen, alkyl ($C_1$—$C_{48}$), alkoxy ($C_{1-48}$), alkenyl ($C_{2-48}$), aryl ($C_{6-12}$), alkaryl ($C_{7-12}$), and at least one of $R_1$, $R_2$, $R_3$, and $R_4$ is alkyl ($C_{4-48}$).

2. The emulsion of claim 1 wherein the HLB number is less than about 10.

3. The emulsion of claim 1 wherein x is about 100 to 400, the mole ratio of a:b is 1:1, $R_1$, $R_2$ and $R_3$ are each hydrogen and $R_4$ is $C_{16}H_{33}$.

4. The emulsion of claim 1 wherein said water soluble polymer is a polymer or a copolymer comprised of monomers selected from acrylamide, acrylic acid and its salts, methacrylamide, methacrylic acid and its salts, methyl acrylate, ethyl acrylate, propyl acrylate, methyl methacrylate, ethyl methacrylate, dimethylaminoethyl acrylate, dimethylaminoethyl methacrylate, diethylaminoethyl acrylate, diethylaminoethyl methacrylate, hydroxyethyl acrylate, hydroxyethyl methacrylate, diethylmethylammonioethyl acrylate methylsulfate, tri-methyl-ammonioethyl methacrylate chloride, styrene, acrylonitrile, 2-acrylamido-2-methylpropane sulfonic acid and its salts, 3-(methylacrylamido)propyl-trimethylammonium chloride, vinyl methyl ether, vinyl ethyl ether, vinyl pyridine, vinyl pyrrolidone, vinyl imidazole, diallyldimethylammonium chloride, or mixtures thereof.

5. The emulsion of claim 1, characterized in that it has been obtained by polymerizing the monomers in the presence of an emulsion polymerization stabilizer.

6. The emulsion of claim 1 or claim 5 further containing a second polymeric surfactant which is a linear ABA block copolymer of polyester-polyalkylene oxide-polyester, wherein the alkylene oxide content is less than about 40% by weight, based on the weight of the copolymer, in an amount effective to enhance the stability of said emulsion.

7. The emulsion of claim 6 wherein the second polymeric surfactant is prepared by reacting condensed 12-hydroxystearic acid with polyethylene oxide and contains about 30% by weight, based on the weight of the copolymer, of ethylene oxide.

8. In a process for preparing a stable water-in-oil emulsion containing a water soluble polymer by emulsion polymerization of monomers in the presence of an amount of an emulsion polymerization stabilizer sufficient to stabilize such emulsion during polymerization, the improvement which comprises increasing the monomer content to about 40 to 60% by weight based on the total weight of the emulsion, and incorporating into the emulsion a polymeric surfactant, in an amount sufficient to stabilize the product emulsion, having the formula (I) as defined in claim 1.

9. The process of claim 8 further comprising the addition of a second polymeric surfactant, which is a linear ABA block copolymer of polyester-polyalkylene oxide-polyester wherein the alkylene oxide content is less than about 40% by weight, based on the weight of the copolymer.

10. The process of claim 8 wherein x is about 100 to 400, the ratio of a:b is 1:1, $R_1$, $R_2$ and $R_3$ are each hydrogen and $R_4$ is $C_{16}H_{33}$.

**Patentansprüche**

1. Eine stabile Wasser-in-Öl-Emulsion, umfassend etwa 40 bis 60 Gew.-%, bezogen auf das Gesamtgewicht der Emulsion, eines wasserlöslichen Polymeren und ein polymeres Surfactans der Formel I in einer zur Stabilisierung der Emulsion ausreichenden Menge

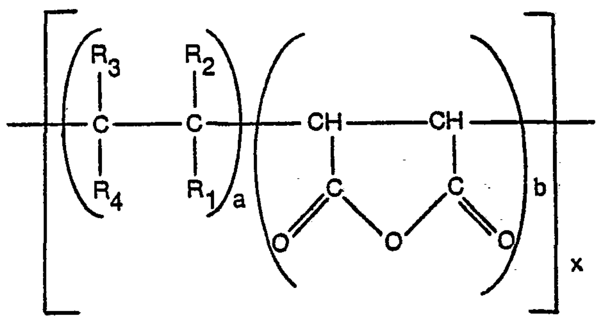

(I)

wobei x eine ganze Zahl größer als etwa 5 bedeutet, das Molverhältnis von a:b von 3:1 bis 1:1 beträgt, mit der Maßgabe, daß die HLB-Zahl bei weniger als etwa 14 gehalten wird, $R_1$, $R_2$, $R_3$ und $R_4$ unabhängig ausgewählt sind aus der Gruppe Wasserstoff, Alkyl ($C_1$—$C_{48}$), Alkoxy ($C_{1-48}$), Alkenyl ($C_{2-48}$), Aryl ($C_{6-12}$), Alkaryl ($C_{7-12}$) und mindestens einer der Reste $R_1$, $R_2$, $R_3$ und $R_4$ für Alkyl ($C_{4-48}$) steht.

2. Emulsion nach Anspruch 1, wobei die HLB-Zahl kleiner als etwa 10 ist.

3. Emulsion nach Anspruch 1, wobei x etwa 100 bis 400 beträgt, das Molverhältnis von a:b 1:1 beträgt, $R_1$, $R_2$ und $R_3$ jeweils Wasserstoff sind und $R_4$ für $C_{16}H_{33}$ steht.

4. Emulsion nach Anspruch 1, wobei das wasserlösliche Polymere ein Polymeres oder Copolymeres ist, erhalten aus Monomeren, die ausgewählt sind aus Acrylamid, Acrylsäure und deren Salzen, Methacrylamid, Methylcrylsäure und deren Salzen, Methylacrylat, Äthylacrylat, Propylacrylat, Methylmethacrylat, Äthylmethacrylat, Dimethylaminoäthylacrylat, Dimethylaminoäthylacrylat, Dimethylaminoäthylmethacrylat, Diäthylaminoäthylacrylat, Diäthylaminoäthylmethacrylat, Hydroxyäthylacrylat, Hydroxyäthylmethacrylat, Diäthylmethylammonioäthylacrylatmethylsulfat, Trimethylammonioäthylmethacrylatchlorid, Styrol, Acrylnitril, 1-Acryl-amido-2-methylpropansulfonsäure und deren Salzen, 3-(Methylacrylamido)-propyltrimethylammoniumchlorid, Vinylmethyläther, Vinyläthyläther, Vinylpyridin, Vinylpyrrolidon, Vinylimidazol, Diallyldimethylammoniumchlorid oder Mischungen derselben.

5. Emulsion nach Anspruch 1, dadurch gekennzeichnet, daß sie erhalten wurde durch Polymerisation der Monomeren in Gegenwart eines Emulsionspolymerisationsstabilisators.

6. Emulsion nach Anspruch 1 oder Anspruch 5, welche außerdem ein zweites polymeres Surfactant enthält, bei dem es sich um ein lineares ABA-Block-Copolymeres von Polyester-Polyalkyenoxyd-Polyester haldelt, wobei der Alkylenoxydgehalt kleiner ist als etwa 40 Gew.%, bezogen auf das Gewicht des Copolymeren, und wobei das Surfactans in einer zur Steigerung der Stabilität der Emulsion wirksamen Menge vorliegt.

7. Emulsion nach Anspruch 6, wobei das zweite polymere Surfactans hergestellt wurde durch Umsetzung von kondensierter 12-Hydroxystearinsäure mit Polyäthylenoxyd und etwa 30 Gew.%, bezogen auf das Gewicht des Copolymeren, an Äthylenoxyd enthält.

8. Verfahren zur Herstellung einer stabilen Wasser-in-Öl-Emulsion mit einem Gehalt eines wasserlöslichen Polymeren durch Emulsionspolymerisation von Monomeren in Gegenwart einer Menge eines Emulsionspolymerisationsstabilisators, die ausreicht, eine derartige Emulsion während der Polymerisation zu stabilisieren, dadurch gekennzeichnet, daß man den Monomergehalt auf etwa 40 bis 60 Gew.%, bezogen auf das Gesamtgewicht der Emulsion, steigert und der Emulsion ein polymeres Surfactans in einer Menge einverleibt, die ausreicht, um die Produktemulsion zu stabilisieren, wobei das Surfaktans die in Anspruch 1 definierte Formel I hat.

9. Verfahren nach Anspruch 8, umfassend die Zusätzliche Zugabe eines zweiten polymeren Surfactans, wobei es sich um ein lineares ABA-Block-Copolymeres von Polyester-Polyalkylenoxyd-Polyester handelt, wobei der Alkylenoxydgehalt kleiner ist als etwa 40 Gew.%, bezogen auf das Gewicht des Copolymeren.

10. Verfahren nach Anspruch 8, wobei x etwa 100 bis 400 beträgt, das Verhältnis von a:b 1:1 beträgt, $R_1$, $R_2$ und $R_3$ jeweils Wasserstoff sind und $R_4$ für $C_{16}H_{33}$ steht.

**Revendications**

1. Emulsion eau-dans-huile stable constituée d'environ 40 à 60% en poids, sur la base du poids total de l'émulsion, d'un polymère soluble dans l'eau, et d'un polymère tensio-actif en une quantité suffisante pour stabiliser l'émulsion, ayant la formule (I):

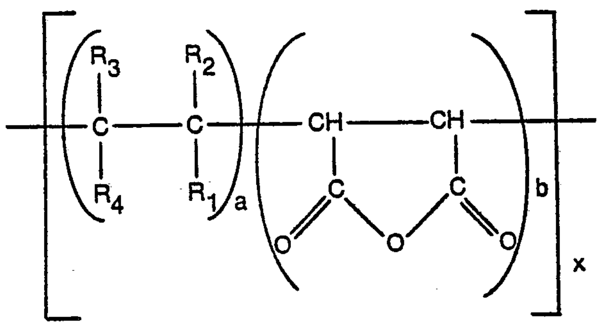
(I)

dans laquelle x est un nombre entier supérieur à environ 5, le rapport molaire de a:b est de 3:1 à 1:1, pourvu que le rapport HLB soit maintenu à moins d'environ 14, $R_1$, $R_2$, $R_3$ et $R_4$ sont choisis indépendamment dans le groupe consistant en de l'hydrogène, un groupe alkyle ($C_1$—$C_{48}$), alcoxy ($C_{1-48}$), alcényle ($C_{2-48}$), aryle ($C_{6-12}$), alkyle-aryle ($C_{7-12}$) et au moins l'un de $R_1$, $R_2$, $R_3$ et $R_4$ est un groupe alkyle ($C_{4-48}$).

2. Emulsion de la revendication 1, dans laquelle la valeur HLB est inférieure à environ 10.

3. Emulsion de la revendication 1, dans laquelle x est égal à environ 100—400, le rapport molaire de a:b est de 1:1, $R_1$, $R_2$ et $R_3$ représentent chacun de l'hydrogène et $R_4$ représente $C_{16}H_{33}$.

4. Emulsion de la revendication 1, dans laquelle ledit polymère soluble dans l'eau est un polymère ou copolymère constitué de monomères choisis entre l'acrylamide, l'acide acrylique et ses sels, le méthacrylamide, l'acide méthacrylique et ses sels, l'acrylate de méthyle, l'acrylate d'éthyle, l'acrylate de propyle, le méthacrylate de méthyle, le méthacrylate d'éthyle, l'acrylate de diméthylaminoéthyle, le méthacrylate de diméthylaminoéthyle, l'acrylate de diéthylaminoéthyle, le méthacrylate de diéthylaminoéthyle, l'acrylate d'hydroxyéthyle, le méthacrylate d'hydroxyéthyle, le méthylsulfate de diéthylméthylammonioéthyle d'acrylate, le chlorure de triméthylammonioéthyle d'acrylate, le styrène, l'acrylonitrile, l'acide 2-acrylamido-2-méthylpropane-sulfonique et ses sels, le chlorure de 3-(méthylacrylamido)-propyl-triméthylammonium, l'éther de vinyle et de méthyle, l'éther de vinyle et d'éthyle, la vinyl-pyridine, la vinyl-pyrrolidone, le vinyl-imidazole, le chlorure de diallyldiméthylammonium, ou leurs mélanges.

5. Emulsion de la revendication 1, caractérisée en ce qu'elle a été obtenue par polymérisation des monomères en présence d'un stabilisant de polymérisation en émulsion.

6. Emulsion de la revendication 1 ou de la revendication 5 contenant en outre un second polymère tensioactif qui est un copolymère séquencé ABA linéaire de polyester-oxyde de polyalkylène-polyester, dans lequel la teneur en oxyde d'alkylène est inférieure à environ 40% en poids, sur la base du poids du copolymère, en une quantité efficace pour améliorer la stabilité de ladite émulsion.

7. Emulsion de la revendication 6 dans laquelle le second polymère tensio-actif est préparé en faisant réagir l'acide 12-hydroxystéarique condensé avec l'oxyde de polyéthylène et contient environ 30% en poids d'oxyde d'éthylène, sur la base du poids du copolymère.

8. Procédé de préparation d'une émulsion eau-dans-huile stable contenant un polymère soluble dans l'eau par polymérisation en émulsion de monomères en présence d'une quantité de stabilisant de polymérisation en émulsion suffisante pour stabiliser cette émulsion pendant la polymérisation, le perfectionnement consistant à augmenter la teneur en monomères à environ 40 à 60% en poids, sur la base du poids total de l'émulsion, et à incorporer dans l'émulsion un polymère tensio-actif, en une quantité suffisante pour stabiliser l'émulsion produite, ayant la formule (I) comme défini dans la revendication 1.

9. Procédé selon la revendication 8, comprenant en outre l'addition d'un second polymère tensio-actif

qui est un copolymère séquencé ABA linéaire de polyester-oxyde de polyalkylène-polyester dans lequel la teneur en oxyde d'alkylène est inférieure à environ 40% en poids, sur la base du poids du copolymère.

10. Procédé selon la revendication 8, dans lequel x est égal à environ 100 à 400, le rapport a:b est de 1:1, $R_1$, $R_2$ et $R_3$ sont chacun de l'hydrogène et $R_4$ est $C_{16}H_{33}$.